# EUROPEAN PATENT APPLICATION

(11) **EP 1 569 216 A1**
(43) Date of publication of application: **31.08.2005**
(21) Application number: 02783687.3
(22) Date of filing: 29.11.2002
(51) Int. Cl.: G11B 11/105

(54) **MAGNETO-OPTICAL STORAGE MEDIUM REPRODUCTION METHOD AND MAGNETO-OPTICAL STORAGE APPARATUS USING THE METHOD**

(71) Applicant: FUJITSU LIMITED, Kanagawa 211-8588 (JP)
(72) Inventor: NANBA, Yoshiyuki, Kawasaki-shi, Kangawa 211-8588 (JP)
(74) Representative: Stebbing, Timothy Charles
(86) International application number: PCT/JP2002/012479
(87) International publication number: WO 2004/051640

(57) **Abstract**

A magneto-optical storage apparatus and a reproducing method are provided. The magneto-optical storage apparatus is capable of using a magneto-optical storage medium provided with recording layer and reproducing layer. In the magneto-optical storage medium, information in the recording layer is transferred to the reproducing layer through irradiation of light at a given intensity for reproduction and through application of a reproductive magnetic field. The information contained in a given area thereof is enabled to be reproduced. The apparatus includes: an optical head irradiating light to the given area at least at a given intensity for reproduction; a permanent magnet applying at least the reproductive magnetic field to the given area; and a control unit controlling the optical head and the permanent magnet to reproduce the information, calculating a reproductive error rate associated with the reproduction and altering the strength of the reproductive magnetic field based on the reproductive error rate.

## Description

### TECHNICAL FIELD

The present invention relates to a reproducing method of a magneto-optical storage medium that performs recording and reproducing of information using light and a magnetic field, and a to magneto-optical storage apparatus using the reproducing method.

### BACKGROUND ART

In recent years, the performances of personal computers have made remarkable improvements. In accordance with such improvements, the storage capacity has been growing steadily and an increase in storage capacity is also being demanded for an external storage device that is used to exchange data with the outside. Further, since small, battery-operated and portable personal computers have also been put to practical use, a low-power consumption function connectable to such personal computers is also needed for the external storage device.

A representative example of the external storage device is a 3.5-inch magneto-optical disc. Starting with a product of 128 megabytes (MB) in its storage capacity, it developed to 230MB, 540MB, 640MB, and then to 1.3 gigabytes (GB), and the storage capacity has now reached 2.3GB. In order to attain a higher capacity, a MSR (Magnetically induced Super Resolution) medium and a MSR technology using the MSR medium have been adopted from the 1.3GB products on.

The MSR medium, for example, has three layers: a reproducing layer, a middle layer and a recording layer, and binary data is recorded in the recording layer as a recorded mark which is smaller than a beam spot generated by a laser beam applied to the medium. When the laser beam is applied to a rotating magneto-optical disc, areas of different temperatures are generated within the beam spot, and when a reproductive magnetic field is applied there, an area (mask) of the reproducing layer with one magnetization direction is formed within the beam spot due to the properties of the MSR medium.

The MSR technology, includes a reproducing method that masks a given area within a beam spot and enables the reading of a recorded mark located in an aperture that is not masked by controlling a laser beam and a reproductive magnetic field at reproducing. With the use of the MSR technology, only the recorded mark located within the aperture can be reproduced even if multiple recorded marks are contained in the beam spot, and the MSR technology can also prevent problems such as, a signal from a nearby track getting crossed into a signal to be reproduced (cross talk). In addition, a higher capacity has been realized by reducing the recorded mark size and the distance between the recorded marks.

However, a greater intensity of a reproductive magnetic field is sometimes required to reproduce the MSR medium than to record (to erase) data. For example, when the medium is placed in an environment that has an operative temperature of more than 50 degree centigrade, the reproductive magnetic field strength required is significantly greater when compared to the medium being placed in ambient temperature, and to cite a case, a large reproductive magnetic field, such as more than 350 oersted (Oe, 1Oe =(1000/4π) A/m, π shows the circle ratio) is sometimes required. Therefore, a combination of a irradiated light intensity and the reproductive magnetic field strength has to be properly selected for optimization in accordance with an operative temperature. In the meantime, if π=3.14, 1 oersted is approximately 79.62 ampere/meter.

Also, multiple masks are sometimes formed at reproducing in the MSR technology. For example, when a front mask and a rear mask are to be formed at the font and the rear of the beam in its traveling direction, the temperature in an area of the front mask side is lower than that in an area of the rear mask side and the front mask has a given level of coercive force. In order to arrange the directions of magnetization into one, the reproductive magnetic field must be greater than the given coercive force and the front mask must be applied with the greater magnetic field than the rear mask. Therefore, coupled with the optimization described earlier, the balance of the reproductive magnetic field has to be well controlled.

Further, delicate controls are required to set up the magnetic field for the reproductive magnetic field and the size of the magnetic field that the medium receives has to be also controlled to keep it constant by considering the balance described above. In addition, considering a portable external storage device, which is expected to be predominant in the future, the use of an electromagnet to generate the reproductive magnetic field is disadvantageous in terms of power consumption and thus the use of a permanent magnet is desirable.

Japanese Patent Application Laid-Open Publication No. 2001-176141, the prior application of the inventors of the application concerned, discloses a method to set up an optimum reproductive laser power (irradiated light intensity), however the document does not refer to the optimization of the reproductive magnetic field strength. Also, Japanese Patent Application Laid-Open Publication No. 1999-259925, the prior application of the inventors of the application concerned, discloses a method to set the intensities of the reproductive magnetic field and of the reproductive laser power (irradiated light intensity) optimally using a super-resolution technology, however the method is limited to only when a mask is formed on the front or rear side and thus the document does not refer to the balance of the reproductive magnetic field intensities when masks are formed on both front and rear sides.

International Application No. JP01/04684, the prior application of the inventors of the application concerned, presents a magneto-optical storage medium apparatus characterized by exerting of the stronger magnetic field on the front mask side than on the rear mask side by means of moving the peak position of a bias magnetic field to be applied from the center of the laser beam spot to a given direction, however the permanent magnet is not used to apply the reproductive magnetic field thus it is disadvantageous in terms of power consumption.

Further, International Application No. JP02/00244, the prior application of the inventors of the application concerned, proposes a storage apparatus using a permanent magnet to apply the reproductive magnetic filed, and with the apparatus, the shape of the permanent magnet is devised to make the magnetic field strength exerted on the front mask greater than the reproductive magnetic field strength; however, the document does not refer to an optimum combination of the irradiated light intensity and the reproductive magnetic field strength to reduce a reproductive error rate.

As another related documents, Japanese Patent Application Laid-Open Publication No. 1997-204706 discloses a magneto-optical recording and reproducing apparatus that controls the magnetic field strength to an optimum value by controlling the position of a permanent magnet, however the document does not refer to a reproductive error rate. Further, other related documents, such as Japanese Patent Application Laid-Open Publication Nos. 1992-278239, 1993-62276 and 1990-154301 are also available, however none of them are aimed at optimizing the magnetic field strength and the irradiated light intensity.

In recognition of the problems described above, the irradiated light intensity and the reproductive magnetic field have to be appropriately selected for optimization in reproducing information using the MSR medium. Also, when the front mask and the rear mask are used to reproduce, it is desirable to control the reproductive magnetic field in such a way that the front mask is applied with a greater reproductive magnetic field strength than that the rear mask. Furthermore, it is also desirable to use the permanent magnet to reduce the power consumption and to be able to control to maintain the optimized reproductive magnetic field strength.

### DISCLOSURE OF THE INVENTION

In view of the above problems, the object of the present invention is to provide a magneto-optical disc apparatus and a method of reproducing information with the optimized irradiated light intensity and optimized reproductive magnetic field.

The above object is achieved by the provision of a magneto-optical storage apparatus capable of using a magneto-optical storage medium provided with a recording layer and a reproducing layer. In the magneto-optical storage medium, information in the recording layer is transferred to the reproducing layer through irradiation of light at a given intensity for reproduction and through application of a reproductive magnetic field. The information contained in a given area thereof is enabled to be reproduced. The apparatus includes: an optical head irradiating light to the given area at least at a given intensity for reproduction; a permanent magnet applying at least the reproductive magnetic field to the given area; and a control unit controlling the optical head and the permanent magnet to reproduce the information, calculating a reproductive error rate associated with the reproduction and altering the strength of the reproductive magnetic field based on the reproductive error rate.

Preferably, in the magneto-optical storage apparatus of the present invention, the control unit further alters the strength of the reproductive magnetic field to a strength at which a given width for strength changes is secured within a range of a magnetic field strength where the reproductive error rate satisfies a given criteria that enables reproduction.

Preferably, in the magneto-optical storage apparatus of the present invention, the control unit further alters the strength of the reproductive magnetic field to a strength at which the reproductive error rate is minimized within a range of a magnetic field strength where the reproductive error rate satisfies a given criteria that enables reproduction.

Preferably, the magneto-optical storage apparatus of the present invention further includes a magnetic sensor measuring the magnetic field strength of the permanent magnet, wherein the control unit further controls the permanent magnet to keep the magnetic field strength measured by the magnetic sensor at the altered reproductive magnetic field strength.

Preferably, the magneto-optical storage apparatus of the present invention further includes unit measuring the distance between the optical head and the magneto-optical storage medium, wherein the control unit further controls the permanent magnet to keep the altered reproductive magnetic field strength in response to the measured distance.

Preferably, in the magneto-optical storage apparatus of the present invention, the permanent magnet is rotatable around a rotational axis, and the control unit controls the permanent magnet by altering the angle of the permanent magnet.

Preferably, in the magneto-optical storage apparatus of the present invention, the permanent magnet is displaceable in a horizontal direction parallel to the magneto-optical storage medium, and the control unit controls the permanent magnet by altering the horizontal position of the permanent magnet.

The above object is achieved by the provision of reproducing method of a magneto-optical storage medium provided with a recording layer and a reproducing layer. In the magneto-optical storage medium, information in the recording layer is transferred to the reproducing layer through irradiation of light at a given intensity for reproduction and through application of a reproductive magnetic field. The information contained in a given area thereof is enabled to be reproduced. The method includes the steps of: irradiating light for reproduction to the given area; applying the reproductive magnetic field to the given area by a permanent magnet; reproducing the information by use of the irradiation light and the reproductive magnetic field; calculating a reproductive error rate associated with the reproduction; and altering the strength of the reproductive magnetic field to be applied by the permanent magnet, based on the reproductive error rate.

According to an embodiment of the present invention, with the information reproducing method of a magneto-optical storage medium, which allows information to be reproduced through applications of the irradiated light intensity and the reproductive magnetic field with a permanent magnet, and the magneto-optical storage apparatus using the reproducing method, information can be reproduced in the optimum reproductive magnetic field while keeping the reproductive error rate below a given order by optimizing the reproductive magnetic field strength with the irradiated light intensity being set higher than a given intensity.

Further, according to another embodiment, with the information reproducing method of a magneto-optical storage medium, which allows information to be reproduced through applications of the irradiated light intensity and the reproductive magnetic field with a permanent magnet, and a magneto-optical storage apparatus using the reproducing method, the calorific value can be reduced with the use of the permanent magnet as compared to an electromagnet, which in turn can suppress an increase in the reproductive magnetic field strength at a high temperature. Also, by displacing the permanent magnet, a portion having the highest magnetic flux density of the permanent magnet can be efficiently applied to an area that needs the magnetic field most when reproducing. For a permanent magnet, the one that controls the magnetic field strength by changing the orientation, the one by changing a horizontal position and so forth can be used.

Also, according to a further embodiment, with the information reproducing method of a magneto-optical storage medium, which allows information to be reproduced through applications of the irradiated light intensity and the reproductive magnetic field with a permanent magnet, and a magneto-optical storage apparatus using the reproducing method, signals can be reproduced in a more stabilized manner with a feedback control, which constantly monitors the intensity of the magnetic field and controls to keep the monitoring signals steady, even if the reproductive magnetic field strength fluctuates due to vibrations that the apparatus receives.

Also, according to yet another embodiment, with the information reproducing method of a magneto-optical storage medium, which allows information to be reproduced through applications of the irradiated light intensity and the reproductive magnetic field with a permanent magnet, and a magneto-optical storage apparatus using the reproducing method, a focus servo control circuit is provided to monitor the distance between the magneto-optical storage medium and an optical head to keep the intensity of the magnetic field that the medium receives constantly stable. By controlling the reproductive magnetic field strength according to the changes in distance, stable recording, reproduction and erasing become possible because the magnetic field that the medium receives due to vibrations of the medium surface doesn't change. Also, according to other embodiment, with the information reproducing method of a magneto-optical storage medium, which allows information to be reproduced through applications of the irradiated light intensity and the reproductive magnetic field with a permanent magnet, and a magneto-optical storage apparatus using the reproducing method, even if the distribution of the reproductive error rate changes due to a rise in the operative temperature of the magneto-optical storage apparatus, the reproductive magnetic field can be set to optimum in accordance with the change.

### BRIEF DESCRIPTION OF THE DRAWINGS

Fig. 1 shows a configuration example of an embodiment of the magneto-optical disc apparatus of the present invention;
Fig. 2 shows an example of a bit error rate distribution when reproducing information for the combination of the reproductive magnetic field and the irradiated light intensity;
Fig. 3 is a flowchart that describes the process of determining the optimum magnetic field strength;
Fig. 4 shows an embodiment of the permanent magnet and its support in Fig. 1;
Fig. 5 shows another embodiment of the permanent magnet and its support in Fig. 1; and
Fig. 6 describes a way of reproducing information of an existing MSR medium.

### BEST MODE FOR CARRYING OUT THE INVENTION

In the following, modes for carrying out the present invention are described by drawings. However, the technical scope of the present invention is not to be limited to embodiments but it is to cover the present invention described in the claim as well as its equivalents.

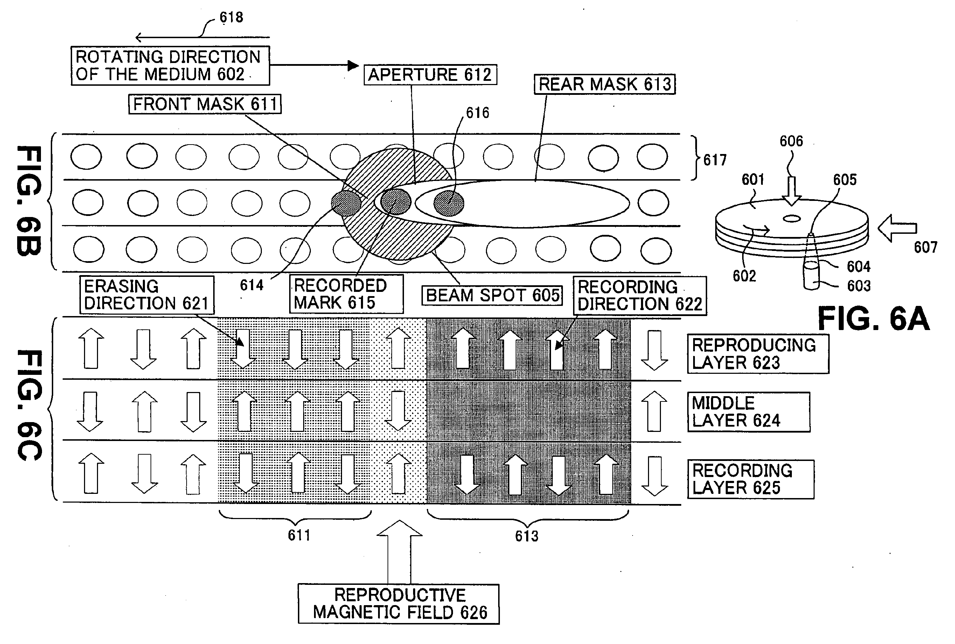

First, recording of information with a magneto-optical disc apparatus using a MSR medium, which is the premise of the present invention, is explained. The MSR medium of DRAD (Double Mask Rear Aperture Detection) method is used to explain here. Fig. 6 describes an existing information reproducing. Fig. 6A describes the way of a laser beaming at a magneto-optical disc medium. In Fig. 6A, the magneto-optical disc medium 601 rotates in an anticlockwise direction 602. A laser beam 604 from an optical head 603 is applied to the magneto-optical disc medium 601 and a beam spot 605 is formed on the medium.

Fig. 6B is a top view of the magneto-optical disc medium 601 seen from a vertical direction 606 in Fig. 6A against the magneto-optical disc medium. A portion of the magneto-optical disc medium 601 is excerpted. Many tracks 617 exist on the magneto-optical disc medium 601 and information is recorded on the tracks as a recorded mark 615. The recorded mark 615 is in a recording layer 625 to be described and the mark is transferred to a reproducing layer 623 to be also described and reproduced.

Fig. 6B shows a state of a front mask 611, an aperture 612 and a rear mask 613 being formed within the beam spot 605. In Fig. 6B the recorded mark is included in the beam spot 605. The front mask, the rear mask and the aperture will be described later. If the rotation of the medium is stopped, the beam spot 605 appears as if to proceed to a direction 618, which is opposite the rotation direction 602 of the medium. To the beam spot 605, a beam's seeming traveling direction side 618 is called front and a side of the medium's rotating direction 602 is called rear. The front mask is not shown but is spread across the front, and a recorded mark 614 is located in the front mask 611, a recorded mark 615 in the aperture 612 and a recorded mark 616 in the rear mask 613 in Fig. 6B.

Fig. 6C is a sectional view of a middle track in Fig. 6 when the magneto-optical disc medium 601 is seen from a lateral direction 607 in Fig. 6A. The magneto-optical disc medium 601 using the MSR medium includes of a reproducing layer 623, a middle layer 624 and a recording layer 625. In the recording layer 625, information is recorded as a recorded mark using magnetization of a recording direction 622 and an erasing direction 621 that face against each other in order to record binary data of 0 and 1. In Fig. 6C, an upward arrow is represented by the recording direction 622 and a downward arrow by the erasing direction 621.

The three layers have the following properties. First, concerning coercive force, the recording layer 625 has higher coercive force than the other two layers at ambient temperature. Next, concerning switched connection force, the switched connection force of the reproducing layer 623 and the middle layer 624 is strong at ambient temperature and magnetization directions of these two layers go against each other. At a given temperature, the switched connection of the recording layer 625, the middle layer 624 and the reproducing layer 623 become stronger. As a result, at the given temperature, information in the recording layer is to be transferred to the reproducing layer. Further, at a temperature higher than the given temperature, the reproducing layer 623 and the middle layer 624 have a property to lose the switched connection between them.

In addition, concerning effects on the reproductive magnetic field, the middle layer 624 is more susceptible to receiving effects of the reproductive magnetic field than the reproducing layer 623 is at ambient temperature, and the middle layer is magnetized to the same direction as the reproductive magnetic field. Then the reproducing layer is magnetized to the opposite by the switched connection. Also, at a temperature at which the switched connection of the reproducing layer 623 and the middle layer 624 is lost, the reproducing layer is affected by the reproductive magnetic field and becomes magnetized in the same direction as the reproductive magnetic field. The temperature that the recording layer is affected by the reproductive magnetic field is higher than the temperature at which the switched connection of the reproducing layer 623 and the middle layer 624 is lost, thus the recording layer is not affected by the reproductive magnetic field at the temperature of which the switched connection of the reproducing layer 623 and the middle layer 624 is lost.

Next, the way of reproducing information in the recording layer 625 is explained with reference to Fig. 6B and Fig. 6C. When the laser beam 604 is applied to the rotating magneto-optical disc medium 601, the beam spot 605 is formed and the temperature of a recorded mark within the beam spot 605 rises. Since the magneto-optical disc medium 601 moves as it rotates, differences in temperature occur within the beam spot 605 due to differences in the amount of time applied with the laser beam.

The time applied with the laser beam is short for the recorded mark 614 in Fig. 6C and thus has the lowest temperature in the beam spot 605. A temperature of the recorded mark 615 in the center of the beam spot 605 is higher than that of the recorded mark 614. Also, the time applied with the laser beam is longer for the recorded mark 616 than for the other recorded marks in the beam spot 605 and thus its temperature is higher than that of the recorded mark 615.

At any given time, application of the laser beam is controlled so that the recorded mark 614 becomes at ambient temperature, the recorded mark 615 at the given temperature of which the transfer from the recording layer 625 to the reproducing layer 623 takes place, and the recorded mark 616 at the temperature of the switched connection of the reproducing layer 623 and the middle layer 622 becomes lost. The reproductive magnetic field 626 that is in the same direction as the recording direction 622 is applied here.

Having done this, due to the properties of the three layers, the middle layer 624 is magnetized into the recording direction 622 at the position of the recorded mark 614, and the reproducing layer 623 becomes magnetized into the erasing direction 621 by the switched connection. At the position of the recorded mark 615, information in the recording layer 625 is transferred to the reproducing layer 623. At the position of the recorded mark 616, the reproducing layer 623 is magnetized into the recording direction.

Although not shown, receiving the effects of the reproductive magnetic field, an area that has the same magnetization direction as the recorded mark 614 is formed at the recorded mark on the front side. Likewise, an area that has the same magnetization direction as the recorded mark 616 is formed at the recorded mark on the rear side. They are the front mask 611 and the rear mask 613 respectively.

As described above, the front mask 611, which is magnetized into the direction opposite from that of the reproductive magnetic field 626 (the erasing direction 621 in Fig. 6C), is formed in the front side of the reproducing layer 623, and the rear mask 613, which is magnetized into the same direction as that of the reproductive magnetic field 626 (the recording direction 622 in Fig. 6C), is formed in the rear side of the reproducing layer 623. In Fig. 6C, the oval shaped rear mask 613 is formed on the rear side by the rotation of the magneto-optical disc medium 616 and thermal diffusion, and the crescent-shaped aperture 612 is formed from the beam spot 605, which is not covered by neither the front mask 611 nor the rear mask 613.

Since the magnetization directions of the front mask 611 and the rear mask 613 are opposite, the magnetization direction of the recording layer, which has been transferred to the reproducing layer at the position of the recorded mark 615, determines the direction of magnetization included in reflected lights from the beam spot 605. Therefore, by analyzing the reflected lights from the beam spot 605, the recorded mark 615 is accurately reproduced though it is smaller than the beam spot 605.

However, with the existing magneto-optical disc apparatus, the irradiated light intensity and the reproductive magnetic field are not optimized and so consuming more power than necessary has been a problem. Also, even with the magneto-optical disc apparatus for which the irradiated light intensity and the reproductive magnetic field are optimized, problems remain, such as an electromagnet that consumes a large amount of power is used to apply the reproductive magnetic field with no consideration to a balance between the magnetic field intensities exerted on the front mask, which requires a greater reproductive magnetic field than the rear mask does, and the rear mask, and thus leave room for further improvements.

Given such circumstances, the magneto-optical disc apparatus, which enables the MSR medium to be reproduced upon optimizing the intensities of the laser beam and of the reproductive magnetic field to be applied, and the reproducing method will be described in a mode for carrying out the present invention. Also, concerning optimization, the magneto-optical disc apparatus with which the magnetic field is set to exert higher intensity on the front mask, which requires the stronger reproductive magnetic field, than on the rear mask will be described along with the reproducing method. To apply various magnetic fields (recording, erasing or reproduction), the permanent magnet is used to lower the power consumption for the overall apparatus.

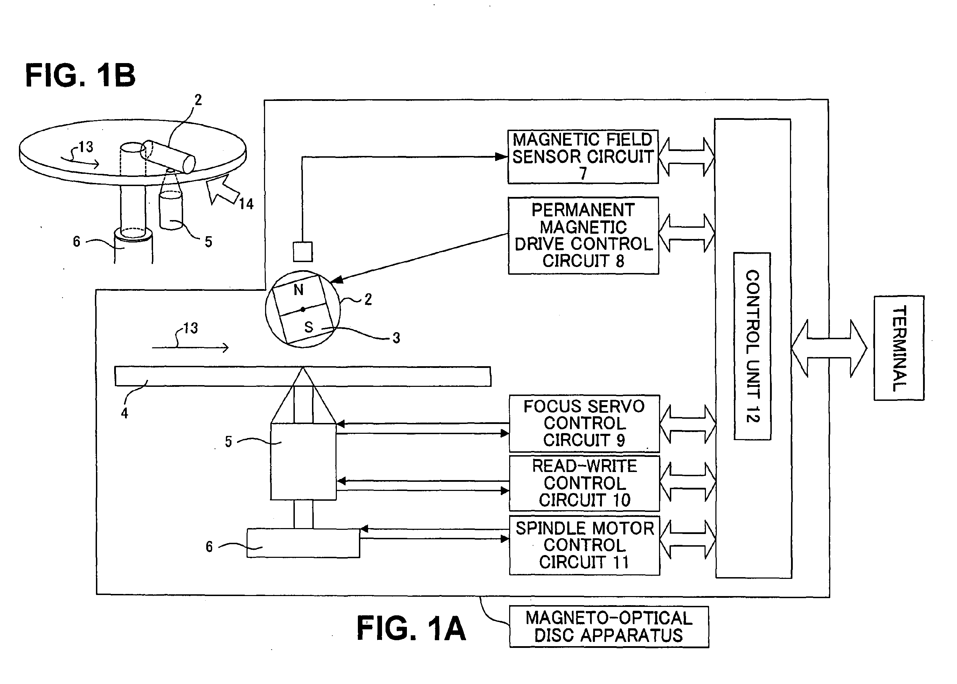

Fig. 1 shows a configuration example of an embodiment of the magneto-optical disc apparatus of the present invention. The magneto-optical disc apparatus records information onto the magneto-optical disc medium and reproduces the recorded information using light and magnetism. Fig. 1A especially shows devices and circuits associated mainly with reproducing of the magneto-optical disc medium 4, of the magneto-optical disk apparatus, with the magneto-optical disc medium 4 and an optical head 5 being viewed from a direction 14 in Fig. 1B. The magneto-optical disc medium is connected to a terminal such as a computer through an interface not shown in control unit 12, and an instruction to record or reproduce and information from the terminal are transmitted to and from the control unit 12.

The magneto-optical disc medium 4 is forced to rotate in a rotating direction 13 by a spindle motor 6. The rotating magneto-optical disc medium is applied with the laser beam from the optical head 5 and then is applied with the magnetic field by the permanent magnet 3 to carry out recording and reproducing of information. An MSR medium is used as the magneto-optical disc medium 4.

The permanent magnet 3 is supported by a support unit 2 and is displaced by a permanent magnet drive control circuit 8. By displacing the permanent magnet 3, the magnetic field strength to apply the magneto-optical disc medium 4 can be appropriately modified. As an example, a bar-shaped permanent magnet that revolves around an axis is drawn in Fig. 1A and the position and the magnetic field strength is modified through controlling the rotation of the axis.

A magnetic sensor 1 detects the magnetic field strength of the permanent magnet 3. The sensor is used to monitor the magnetic field strength to be applied with and any fluctuations in the magnetic field strength due to vibrations of the apparatus. A focus servo control circuit 9 controls the intensity of the laser beam to be applied with and monitors the distance between the magneto-optical disc medium 4 and the optical head 5. If the distance between the optical head 5 and the magneto-optical disc medium 4 fluctuates due to vibrations of the magneto-optical disc apparatus or of the magneto-optical disc medium surface, the distance between the permanent magnet 3 and the magneto-optical disc medium 4 is also modified and the feedback control is carried out to maintain the reproductive magnetic field strength properly in conjunction with the control unit 12 to be described later.

A read-write control circuit 10 moves the optical head 5 to a given address on the magneto-optical disc medium 4 to be recorded or reproduced and controls sending and receiving of information to be recorded or reproduced. A spindle motor control circuit 11 controls the rotation of the spindle motor 6.

The control unit 12 stores a CPU that carries out overall control over the magneto-optical disc apparatus not shown along with computed results and setups done in the CPU, and the unit also has a memory not shown that stores programs to control the CPU. The control unit 12 issues control instructions to a magnetic field sensor circuit 7, the permanent magnet drive control circuit 8, the focus servo control circuit 9, the read-write control circuit 10, and the spindle motor control circuit 11. For example, if the magnetic field sensor circuit 7 has detected that the magnetic field strength has fluctuated from the optimum one, the control unit 12 will instruct the permanent magnet drive control circuit 8 to move the permanent magnet 3 to a position where the optimum magnetic field strength can be maintained.

Further, if the focus servo control circuit 9 has detected that the distance between the optical head 5 and the magneto-optical disc medium 4 has fluctuated, which means that the distance between the permanent magnet 3 and the magneto-optical disc medium 4 has also fluctuated, the control unit will instruct the permanent magnet drive control circuit 8 to move the permanent magnet 3 to a position where a magnetic field strength necessary for each operation of recording, erasing or reproducing information can be maintained.

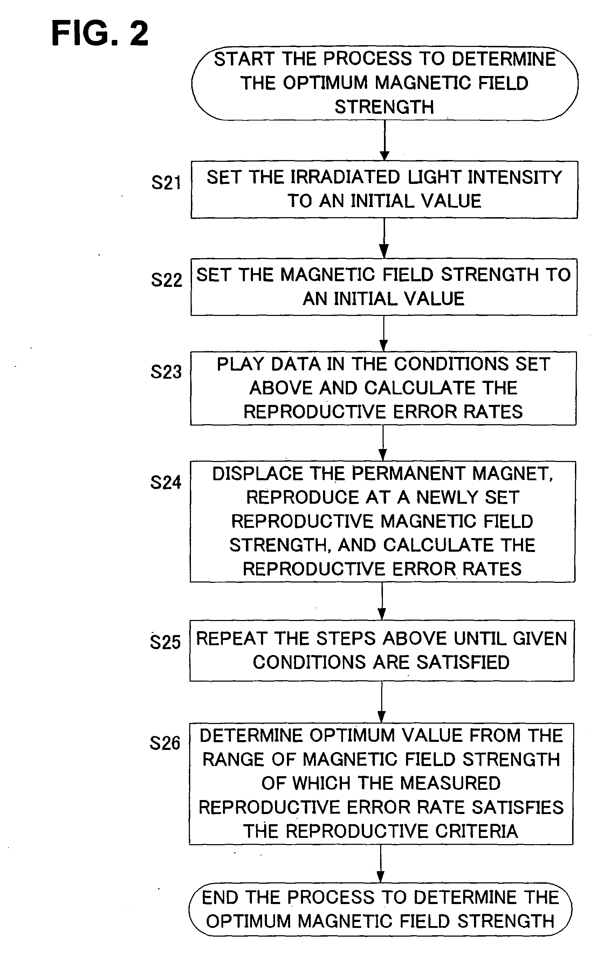

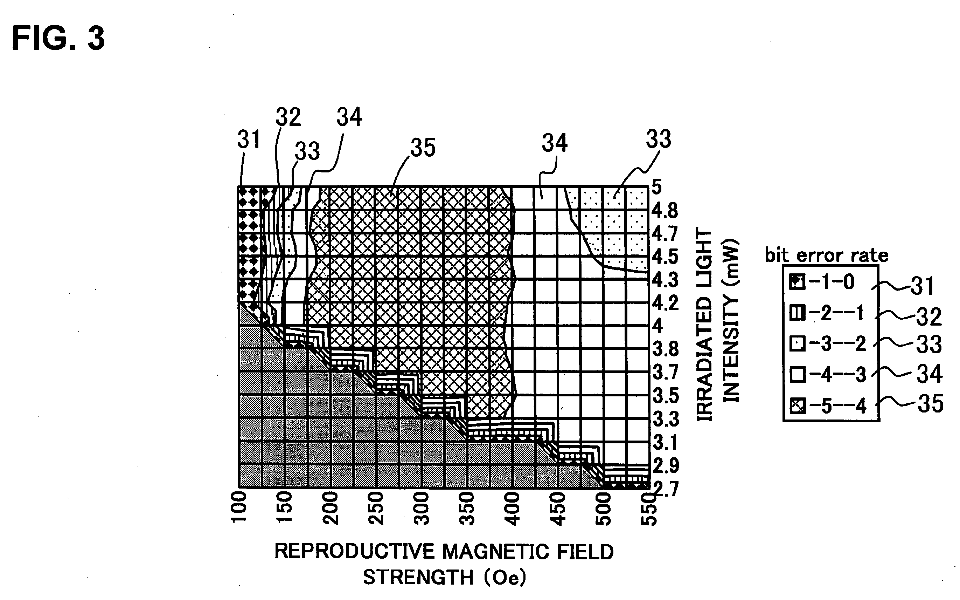

Subsequently to a configuration example of the magneto-optical disc apparatus of the present invention described above, an embodiment of an information reproducing method of the present invention using the magneto-optical disc apparatus in Fig. 1 will be explained with reference to Fig. 2 and Fig. 3. The method of reproducing information in the present invention is to control the reproductive magnetic field and the laser beam a magnetic field strength and a irradiated light intensity decided respectively based on a process to determine the optimum magnetic field strength shown in Fig. 2 to optimize the reproductive magnetic field. An example diagram in Fig. 3 shows the distribution of bit error rates (reproductive error rates) in reproducing information according to combinations of the reproductive magnetic field strength and the irradiated light intensity.

Fig. 2 is a flowchart that explains the process to determine the optimum magnetic field strength. First, the irradiated light intensity is set at an initial value (S21). A given value is set as the initial value for the irradiated light intensity. For example, having pre-recorded a given value in the memory in the control unit 12, the control unit 12 instructs the focus servo control circuit 9 to irradiate the laser beam at the given intensity based on the given value read out of the memory. The focus servo control circuit 9 controls the irradiated light intensity of the optical head 5 based on the instruction received from the control unit 12.

Using Fig. 3, an example will be given here to explain a method to determine an initial value for the irradiated light intensity in a step S31. An example diagram in Fig. 3 shows the distribution of the bit error rates (reproductive error rates) in reproducing information according to combinations of the reproductive magnetic field strength and the irradiated light intensity. The vertical axis shows the irradiated light intensity and the horizontal axis the reproductive magnetic field strength, and the reproductive error rate that corresponds to a combination of the two intensities is drawn into the diagram. The example shows that reproducing is performed more accurately if the reproductive error rate is lower, and reproducing has to be carried out with the reproductive error rate being in an order of 10 to the -5th power for a reproduction standard of the apparatus here.

In Fig. 3, the reproductive error rates are: an order of 10 to the -1st power for an area 31 labeled as -1 to 0,; of 10 to the -2nd power for an area 32 labeled as -2 to -1; of 10 to the -3rd power for an area 33 labeled as -3 to -2; of 10 to the -4th power for an area 34 labeled as -4 to -3; and of 10 to the -5th power for an area 35 labeled as -5 to -4.

Among these areas, the area 35 is called a reproducible area and it is important to select the irradiated light intensity and the reproductive magnetic field strength in such an order of 10 to the -5th power for the reproductive error rate. In Fig. 3, for example, when the irradiated light intensity is fixed at 3.5 milliwatt (mW), a selectable range for the reproductive magnetic field that allows reproduction is approximately between 300 and 400oersted (Oe, 10e =(1000/4π) A/m), however when the irradiated light intensity is raised to 4mW, the selectable range expands to approximately between 170 and 380Oe (Oe, 1Oe =(1000/4π) A/m) and thus we can see that the magnetic field strength as strong as that for 3.5mW is not necessarily required.

Further, when the irradiated light intensity is higher than a given intensity (4mW or higher in Fig. 3), the selectable range for the reproductive magnetic field that allows reproduction becomes almost constant (the range that includes the following: approximately between 200 and 375Oe (Oe, 1Oe =(1000/4π) A/m)). In the specification, the lower bound of the irradiated light intensity such as above is called the smallest reproductive power. In terms of this distribution characteristic, the smallest reproductive power differs depending on materials used for the magneto-optical disc medium, however if materials of the magneto-optical disc medium can be identified, the smallest reproductive power can be also identified.

Therefore, the initial value for the irradiated light intensity is set to the smallest reproductive power. Since the smallest reproductive power can be identified if a magneto-optical disc medium is specified, the control unit 12 is to read out the smallest reproductive power of a corresponding magneto-optical disc medium in the memory (not shown) which records the smallest reproductive power for each magneto-optical disc medium in the control unit 12. Another way to determine the initial value of the irradiated light intensity is to use a given value that has been set without specifying a magneto-optical disc medium and then to modify the irradiated light intensity later.

Reference is again made to Fig. 2 to continue the explanation. Next, the reproductive magnetic field is set to an initial value (S22). A given value is set as an initial value for the reproductive magnetic field strength. For example, having pre-recorded a given value in the memory (not shown) in the control unit 12, the control unit 12 instructs the permanent magnet drive control circuit 8 to displace the position of the permanent magnet 3 to where it can achieve the magnetic field strength based on the given value read out of the memory. As an initial value, for example, a value of 1500Oe (Oe, 1Oe =(1000/4π) A/m) is good to set. The permanent magnet drive control circuit 8 drives the permanent magnet 3 based on the instructions received from the control unit 12.

Then, with a combination of the irradiated light intensity and the optimum magnetic field strength determined in the steps S21 and S22, information is reproduced and the reproductive error rate that is involved in reproduction is calculated (S23). The control unit 12 instructs the read-write control circuit 10 to execute reproducing of information. The read-write control circuit 10 moves the optical head 5 to a position on the magneto-optical disc medium that is recorded with information to be reproduced, reproduces the information and sends the information regarding the occurrence of a reproductive error to the control unit 12. Based on the error information, the control unit can obtain a reproductive error rate.

For example, as one of the methods to obtain the reproductive error rates, the control unit 12 first creates a test pattern and then stores it in the memory, which has not been illustrated. Then the unit erases the information on the sector subject to testing on a test track set up in a given area of the storage medium. After the information in the sector subjected to testing is erased, the test pattern stored in the buffer memory is recorded in the sector subjected to testing.

After recording the test pattern into the sector subject to testing, the control unit 12 sets the irradiated light intensity for the laser spot and the magnetic field strength to the values obtained at the steps S21 and S22, and reproduces the test pattern from the sector subject to testing. Then the test pattern reproduced is compared to the original one stored in the memory and the bit error rates in reproduction (reproductive error rates) is calculated and stored in the memory in the control unit that is not shown. By repeating this procedure as the magnetic field strength is modified, for example, a magnetic field strength with the lowest reproductive error rate can be obtained.

Next, while the irradiated light intensity specified in the step S21 is maintained, the permanent magnet 3 is displaced and information is reproduced with a newly set reproductive magnetic field strength to calculate the reproductive error rate involved in reproduction (S24). The displacement of the permanent magnet and calculation of the error rates are the same as the step S22 and S23. How the permanent magnet is displaced differs depending on the magneto-optical disc apparatus and the shape of the permanent magnet provided. Rotating the permanent magnet, changing its horizontal position and such are some of the examples.

Then, the step S24 is repeated until the given conditions are satisfied (S25). For example, if it is a permanent magnet that takes the form of a rotational axis, a given condition is to repeat the step until the calculation of a reproductive error rate for one rotation is complete. Further, if it is a permanent magnet that takes the form of moving horizontally, calculation of a reproductive error rate is repeated until the magnet fully travels its operating range in the horizontal position. As another example, the calculation can be also repeated till the upper and lower bounds of the reproductive magnetic field strength that satisfy the conditions for the reproducible area are found. Or, having the number of observation points for the reproductive error rates specified, calculation of the reproductive error rates can be repeated until more than the number specified are measured. Also, the following method can be also used: reproduction is carried out with a newly set irradiated light intensity, which has been changed from the smallest reproductive power specified in the step S21, and the reproductive error rates are compared to decide a superior irradiated light intensity of the two for use and then the steps S22 and S23 are to be worked over.

Once the distribution of the reproductive error rates has been calculated for which the reproductive magnetic intensity is modified keeping the irradiated light intensity set in the step S21, an optimum value is determined from the range of the magnetic field strength that satisfies the criteria for which the reproductive error rate calculated can be included in the reproducible area (S26). One way to determine an optimum value is to choose a magnetic field strength with the lowest reproductive error rate in the reproducible area. For example, if the irradiated light intensity of 4mW is chosen as an initial value for the irradiated light intensity in the step S21, the range of the reproductive magnetic field included in the reproducible area is approximately between 175 and 380Oe (Oe, 1Oe =(1000/4π) A/m) in the example in Fig. 3. If the lowest reproductive error rate within this range is 250Oe (Oe, 1Oe = (1000/4π) A/m), the 250Oe is to be chosen for the reproductive magnetic field strength.

The reproductive error rate becomes higher when the front mask and the rear mask are not formed properly. Especially, as described earlier, the front mask requires a higher reproductive magnetic field strength, thus if the magnetic field applied to the front mask is weak, cross talk will take place and the reproductive error rate rises. In other words, when a reproductive magnetic field with the lowest reproductive error rate is chosen, a condition of having the front mask being applied with a stronger forming magnetic field than the rear mask can be created. However, whether or not the front mask requires a stronger forming magnetic field than the rear mask does is dependent on the materials in the medium coating structure and thus the rear mask may require a stronger forming magnetic field than the front mask does depending on coating structures. The control for such a case is the opposite of the one with the front mask needing a stronger forming magnetic field than the rear mask.

Further, when the temperature of the medium in the stationary condition (before the laser beam is applied) rises in accordance with an increase in the operative temperature of the magneto-optical disc apparatus, the distribution in Fig. 3 moves toward the right as a whole and the range of the reproductive magnetic field strength required at a given irradiated light intensity shifts further toward the higher end of the magnetic field strength. However even in this case, the method to determine the reproductive magnetic field strength with the smallest reproductive error rate above can be applied.

Another example of determining the optimum value in the step S26 is to choose the lowest value that allows for sufficient margins from the range between the upper and lower bounds of the magnetic field that satisfies the criteria for the reproducible area. For example, if the irradiated light intensity of 4mW is chosen as an initial value for the irradiated light intensity in the step S21, the upper and lower bounds of the reproductive magnetic field strength that is reproducible are 175Oe and 380Oe (Oe, 1Oe = (1000/4π) A/m) respectively in the example given in Fig. 3.

Even if the magnetic field strength that the magneto-optical disc medium receives has fluctuated due to vibrations of the permanent magnet or is affected by vibrations of the magneto-optical disc apparatus being used or of the surface of the magneto-optical disc medium, sufficient margins to be included in the reproducible area are secured steady and so, for example, the optimum reproductive magnetic field strength may be decided as 275Oe (Oe, 1Oe=(1000/4π) A/m) . If it is an apparatus that is less affected by vibrations of the permanent magnet or of the surface of the magneto-optical disc medium, margins required are smaller thus lower values can be set.

Also, when the temperature of the medium in the stationary condition (before the laser beam is applied) rises in accordance with an increase in the operative temperature of the magneto-optical disc apparatus, the distribution in Fig. 3 moves toward the right as a whole and the range of the reproductive magnetic field strength required at a given irradiated light intensity shifts further toward the higher end of the magnetic field strength. However even in this case, the method to determine the reproductive magnetic field strength that measures the upper and lower bounds of the reproducible reproductive magnetic field strength can be applied.

As for when to carry out the process to determine the magnetic field strength, for example, it can be carried out when the storage medium is inserted, once every specified time, when a recording or reproductive command is issued for the first time after inserting the medium, at retrying after an error, at a temperature change and so forth.

Also, if the information reproducing method is stored as a program in the memory of the control unit 12, it can be executed as a magneto-optical disc apparatus to reproduce the MSR medium with the optimized irradiated light intensity and reproductive magnetic field strength.

Using the information reproducing method of the present invention as well as the magneto-optical disc apparatus that employs the information reproducing method described above, information can be reproduced in the optimum reproductive magnetic field while keeping the reproductive error rate under a given order. To keep the error rate under a given order, the reproductive magnetic field is modified with the irradiated light intensity being set higher than a given intensity and then the optimum reproductive magnetic field is set based on the reproductive error rates obtained. Also, by choosing a reproductive magnetic field that has the smallest reproductive error rate in the reproducible area, a stronger magnetic field can be applied to the front mask than to the rear mask.

Further, even if the reproductive magnetic field has fluctuated, stable reproduction can be carried out by choosing values that allows for the securing of sufficient margins from the reproductive magnetic field between the upper and lower bounds of the reproducible area. Additionally, even if the distribution of the reproductive error rates changes due to an increase in the operative temperature of the magneto-optical disc apparatus, the optimum reproductive magnetic field strength can be set in accordance with the change.

An embodiment of the information reproducing method of the present invention and an embodiment of the magneto-optical disc apparatus that employs the reproducing method have been described above, and subsequently, embodiments of the permanent magnet 3 and a support 4 will be explained to illustrate fluctuations of the reproductive magnetic field in the magneto-optical disc apparatus as well as a condition of which the reproductive magnetic field is applied with the masks.

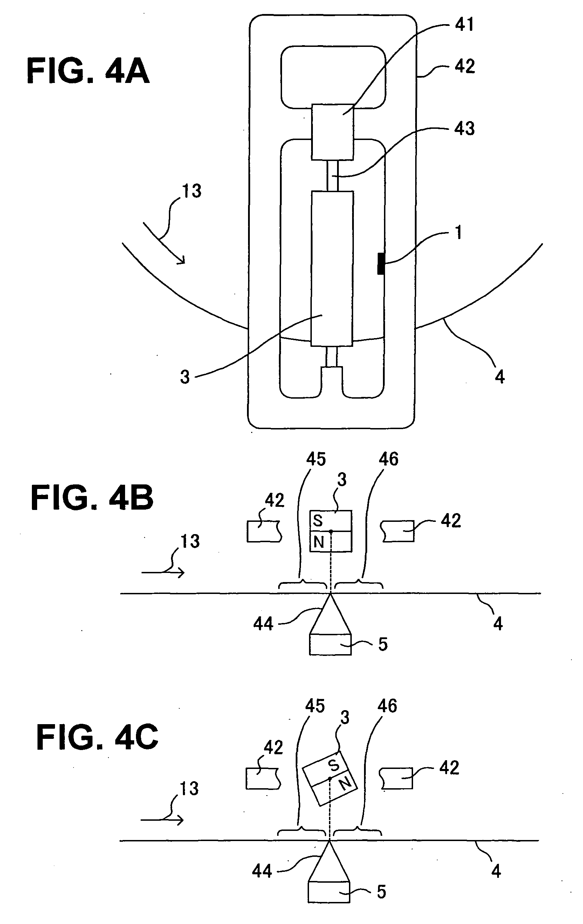

Fig. 4 shows an embodiment of the permanent magnet 3 and the support 2 in Fig. 1. Fig. 4A is a top view of the magneto-optical disc medium 4 seen from the top. In Fig. 4A, the permanent magnet 3 is installed in a frame 42 on a rotational axis 43. The permanent magnet 3 is forced to revolve around the rotational axis 43 by a stepping motor 41 which is connected to the permanent magnet 3 through the rotational axis 43, and the reproductive magnetic field strength to apply with the magneto-optical disc medium 4 is modified.

A magnetic sensor 1 is installed in the frame 42 and the sensor identifies a rotating position of the permanent magnet 3 by detecting changes in the magnetic field of the permanent magnet 3. The magnetization directions for recording and erasing can be reversed by the rotation of the permanent magnet 3.

Fig. 4B is a side view of the magneto-optical disc medium seen from the side toward the center of the disc. A laser beam 44 is applied from the optical head 5 onto the magneto-optical disc medium 4, and a front mask 45 and a rear mask 46 are formed by the reproductive magnetic field applied with the permanent magnet 3 and then reproduction is carried out. In a condition in Fig. 4B, the same magnetic field is exerted on the front mask 45 and the rear mask 46.

Fig. 4C is another side view of the magneto-optical disc medium seen from the side toward the center of the disc. In Fig. 4C, the permanent magnet 3 is tilted and the magnetic field exerted on the front mask 45 is greater than that on the rear mask 46.

With the magneto-optical disc medium of the present invention, a rotary permanent magnet is used as shown in Fig. 4, and optimization of the reproductive magnetic field is achieved by displacing the magnet using rotation. Also, a stronger magnetic field is applied with the front mask side than the rear mask side. In other words, an optimum forming magnetic field for formations of each front mask, rear mask and aperture can be applied respectively. Therefore, a fine aperture can be formed and the reproductive error rate can be lowered. In terms of power consumed by the permanent magnet and the stepping motor, it is more advantageous than using an electromagnet to apply the reproductive magnetic field.

Further, the permanent magnet can be not only used to apply the reproductive magnetic field but can also be used to apply the magnetic field for recording and erasing, and it can be configured to modify the magnetic field strength for recording and erasing with the drive control method of the permanent magnet used for feedback of the reproductive magnetic field, which is described earlier.

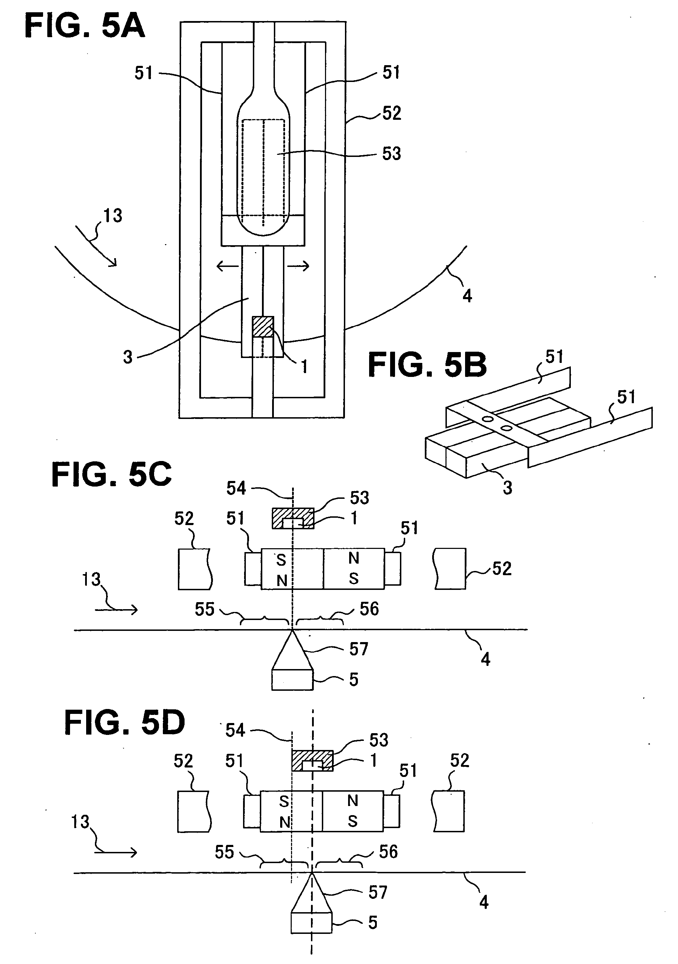

Fig. 5 shows another embodiment of the permanent magnet 3 and the support 2 in Fig. 1. Fig. 5A is a top view of the magneto-optical disc medium 4 seen from the top. In Fig. 5A, the permanent magnet 3 mounted on a leaf spring 51 which is installed in a frame 52. The leaf spring 51 and the permanent magnet 3 are joined as shown in Fig. 5B. With an electromagnet for a permanent magnet drive 53 and the leaf spring 51, a horizontal position of the permanent magnet 3 is modified within a range surrounded by the frame 52 and the reproductive magnetic field strength to apply with the magneto-optical disc medium 4 is modified.

The magnetic sensor 1 is installed in the frame 52 and the sensor identifies a horizontal position of the permanent magnet 3 by detecting changes in the magnetic field of the permanent magnet. By placing permanent magnets side by side with their poles facing differently from each other, for example, the magnetization direction can be reversed for recording and erasing with the left side of the permanent magnet 3 being used for recording and the right side for erasing.

Fig. 5C is a side view of the magneto-optical disc medium seen from the side toward the center of the disc. A laser beam 57 is applied from the optical head 5 onto the magneto-optical disc medium 4, and a front mask 55 and a rear mask 56 are formed by the reproductive magnetic field applied with the permanent magnet 3 and then reproduction is carried out. In Fig. 5C, a plumb line that runs the center of the beam spot is congruent with a centerline 54 on the left side of the permanent magnet, and the same magnetic field is exerted on the front mask 55 and the rear mask 56.

Fig. 5D is another side view of the magneto-optical disc medium seen from the side toward the center of the disc. In Fig. 5D, the plumb line that runs the center of the beam spot which is located rightward from the centerline 54 of the permanent magnet, and the magnetic field exerted on the front mask is greater than that on the rear mask.

With the magneto-optical disc medium of the present invention, a horizontally moving permanent magnet is used as shown in Fig. 5, and optimization of the reproductive magnetic field is achieved by displacing the magnet using a horizontal movement. Also, a stronger magnetic field can be applied with the front mask side than the rear mask side. In other words, an optimum forming magnetic field for formations of each front mask, rear mask and aperture and can be applied respectively. Therefore, a fine aperture can be formed and the reproductive error rate can be lowered. In terms of power consumed by In terms of power consumed by the permanent magnet, the leaf spring and the electromagnet for the permanent magnet drive, it is more advantageous than using an electromagnet to apply the reproductive magnetic field.

Furthermore, the permanent magnet can be not only used to apply the reproductive magnetic field but also used to apply the magnetic field for recording and erasing, and it can be configured to modify the magnetic field strength for recording and erasing with the drive control method of the permanent magnet used for feedback of the reproductive magnetic field, which is described earlier.

### INDUSTRIAL APPLICABILITY

As described above, through the present invention, with the information reproducing method of a magneto-optical storage medium, which allows information to be reproduced through applications of the irradiated light intensity and the reproductive magnetic field with a permanent magnet, and a magneto-optical storage apparatus using the reproducing method, information can be reproduced in the optimum reproductive magnetic field while keeping a reproductive error rate under a given order by optimizing the reproductive magnetic field with the irradiated light intensity being set higher than a given intensity.

Further, The calorific value can be reduced with the use of the permanent magnet as compared to the use of an electromagnet, which in turn can suppress an increase in the reproductive magnetic field strength at a high temperature. Also, by displacing the permanent magnet, a portion of the permanent magnet having the highest magnetic flux density can be efficiently applied to an area that needs the magnetic field most when reproducing. The permanent magnet can be of, e.g., a type controlling the magnetic field strength by altering the orientation thereof, or a type controlling the magnetic field strength by altering the horizontal position thereof.

## Claims

1. A magneto-optical storage apparatus capable of using a magneto-optical storage medium provided with a recording layer and a reproducing layer, in the magneto-optical storage medium, information in the recording layer being transferred to the reproducing layer through irradiation of light at a given intensity for reproduction and through application of a reproductive magnetic field, and the information contained in a given area thereof being enabled to be reproduced, the apparatus comprising:
an optical head irradiating light to the given area at least at a given intensity for reproduction;
a permanent magnet applying at least the reproductive magnetic field to the given area; and
a control unit controlling the optical head and the permanent magnet to reproduce the information, calculating a reproductive error rate associated with the reproduction and altering the strength of the reproductive magnetic field based on the reproductive error rate.

2. The magneto-optical storage apparatus of claim 1, wherein
the control unit further alters the strength of the reproductive magnetic field to a strength at which a given width for strength changes is secured within a range of a magnetic field strength where the reproductive error rate satisfies a given criteria that enables reproduction.

3. The magneto-optical storage apparatus of claim 1, wherein
the control unit further alters the strength of the reproductive magnetic field to a strength at which the reproductive error rate is minimized within a range of a magnetic field strength where the reproductive error rate satisfies a given criteria that enables reproduction.

4. The magneto-optical storage apparatus of claim 1, further comprising a magnetic sensor measuring the magnetic field strength of the permanent magnet, wherein the control unit further controls the permanent magnet to keep the magnetic field strength measured by the magnetic sensor at the altered reproductive magnetic field strength.

5. The magneto-optical storage apparatus of claim 1, further comprising unit measuring the distance between the optical head and the magneto-optical storage medium, wherein the control unit further controls the permanent magnet to keep the altered reproductive magnetic field strength in response to the measured distance.

6. The magneto-optical storage apparatus of claim 1, wherein
the permanent magnet is rotatable around a rotational axis, and wherein
the control unit controls the permanent magnet by altering the angle of the permanent magnet.

7. The magneto-optical storage apparatus of claim 1, wherein
the permanent magnet is displaceable in a horizontal direction parallel to the magneto-optical storage medium, and wherein
the control unit controls the permanent magnet by altering the horizontal position of the permanent magnet.

8. A reproducing method of a magneto-optical storage medium provided with a recording layer and a reproducing layer, in the magneto-optical storage medium, information in the recording layer being transferred to the reproducing layer through irradiation of light at a given intensity for reproduction and through application of a reproductive magnetic field, and the information contained in a given area thereof being enabled to be reproduced, the method comprising the steps of:
irradiating light for reproduction to the given area;
applying the reproductive magnetic field to the given area by a permanent magnet;
reproducing the information by use of the irradiation light and the reproductive magnetic field;
calculating a reproductive error rate associated with the reproduction; and
altering the strength of the reproductive magnetic field to be applied by the permanent magnet, based on the reproductive error rate.

9. The reproducing method of claim 8, wherein
the altering includes to alter the strength of the reproductive magnetic field to a strength at which a given width for strength changes is secured within a range of a magnetic field strength where the reproductive error rate satisfies a given criteria that enables reproduction.

10. The reproducing method of claim 8, wherein
the altering includes to alter the strength of the reproductive magnetic field to a strength at which the reproductive error rate is minimized within a range of a magnetic field strength where the reproductive error rate satisfies a given criteria that enables reproduction.

11. The reproducing method of claim 8, further comprising, after altering, measuring the magnetic field strength of the permanent magnet and controlling the permanent magnet to keep the measured magnetic field strength at the altered reproductive magnetic field strength.

12. The reproducing method of claim 8, further comprising, after altering, measuring the distance between the optical head and the magneto-optical storage medium and controlling the permanent magnet to keep the altered reproductive magnetic field strength in response to the measured distance.

13. The reproducing method of claim 8, wherein
the altering the magnetic field strength includes to displace the permanent magnet by altering the angle of the permanent magnet to alter the reproductive magnetic field strength.

14. The reproducing method of claim 8, wherein
the altering the magnetic field strength includes to displace the permanent magnet by altering the horizontal position of the permanent magnet to alter the magnetic field strength.
